# EUROPEAN PATENT APPLICATION

(11) **EP 4 650 228 A1**
(43) Date of publication of application: **19.11.2025**
(21) Application number: 23927040.8
(22) Date of filing: 29.08.2023
(51) Int. Cl.: B60R 25/20, E05F 15/77

(54) **METHOD FOR CONTROLLING VENTILATION OF VEHICLE, AND VEHICLE BODY CONTROLLER, SYSTEM AND STORAGE MEDIUM**

(30) Priority: 15.03.2023 CN 202310246211
(71) Applicant: Guangzhou Automobile Group Co., Ltd., Guangzhou, Guangdong 511434 (CN)
(72) Inventor: WANG, Chenxin, Guangzhou, Guangdong 511434 (CN); YANG, Xingdong, Guangzhou, Guangdong 511434 (CN)
(74) Representative: Metida
(86) International application number: PCT/CN2023/115504
(87) International publication number: WO 2024/187694

(57) **Abstract**

The present application relates to a vehicle ventilation control method, a vehicle body controller, a system, and a storage medium. The method includes: when receiving an unlock signal from a key, controlling door unlocking, or sunroof opening, or window opening according to the unlock signal, and detecting whether a door is opened within first preset time; if the door is not opened, controlling door locking; if the door is opened, detecting a key position; if the key is not detected, controlling door locking, sunroof closing and window closing; and if the key is detected, determining whether to control door locking, sunroof closing and window closing according to the key position. Through the present application, it is possible to achieve a key-long-press ventilation function while avoiding a risk of accidentally triggering the key-long-press ventilation function.

## Description

The present application claims the priority of the Chinese patent application with the invention name "VEHICLE VENTILATION CONTROL METHOD, BODY CONTROLLER, SYSTEM, AND STORAGE MEDIUM" submitted to the China Patent Office on March 15, 2023, application No. 202310246211.2, and the entire content of which is hereby incorporated by reference.

### TECHNICAL FIELD

The present application relates to the technical field of communication, and in particular, to a vehicle ventilation control method, a vehicle body controller, a system, and a storage medium.

### BACKGROUND

With the continuous development of society and the gradual expansion of the automobile consumer group, the humanization and intelligence of automobiles will be the mainstream ideas of future automobiles. A long-press ventilation function of a vehicle key means that long pressing the key can control opening of windows/a sunroof. For example, long pressing a lock button of the vehicle key can lift the windows, and long pressing an unlock button of the vehicle key can lower the windows. When a car owner inadvertently operates the long-press ventilation function of the vehicle key, causing the windows/sunroof to open, but the car owner is unaware of it, the vehicle may be exposed to rain or items in a car may be at safety risk.

### SUMMARY

An objective of the present application is to propose a vehicle ventilation control method, a vehicle body controller, a system, and a storage medium, to achieve a key-long-press ventilation function while avoiding a risk of accidentally triggering the key-long-press ventilation function.

To achieve the above objective, the present application provides a vehicle ventilation control method, the method including:
when receiving an unlock signal from a key, controlling door unlocking, or sunroof opening, or window opening according to the unlock signal, and detecting whether a door is opened within first preset time;
if the door is not opened, controlling door locking; and
if the door is opened, detecting a key position; if the key is not detected, controlling door locking, sunroof closing and window closing; and if the key is detected, determining whether to control door locking, sunroof closing and window closing according to the key position.

Optionally, the controlling vehicle sunroof or window opening or closing according to the key position includes:
if the key is in a vehicle, sending first prompt information to user equipment, where the first prompt information is used to prompt that the key is in the vehicle and a sunroof and windows are not closed.

Optionally, the determining whether to control door locking, sunroof closing and window closing according to the key position includes:
after sending the first prompt information, receiving a first user instruction sent by the user equipment, and controlling door locking or sunroof closing or window closing according to the first user instruction.

Optionally, the determining whether to control door locking, sunroof closing and window closing according to the key position includes:
if the key is outside the vehicle and within a preset distance range from the vehicle, detecting whether a locking and window lifting function and a remote locking function of the vehicle are turned on;
if the locking and window lifting function and the remote locking function are not turned on at the same time, controlling door locking, sunroof closing and window closing; and
if the locking and window lifting function and the remote locking function are turned on at the same time, monitoring the key position in real time; if the key is not within the preset distance range within second preset time, executing the remote locking function and closing the sunroof and windows; and if the key is still within the preset distance range within the second preset time, stopping real-time monitoring of the key position and turning off the remote locking function.

Optionally, the determining whether to control door locking, sunroof closing and window closing according to the key position further includes:
after turning off the remote locking function, sending second prompt information to the user equipment, where the second prompt information is used to prompt that the door, sunroof and/or windows are not closed.

Optionally, the determining whether to control door locking, sunroof closing and window closing according to the key position further includes:
after sending the second prompt information, receiving a second user instruction sent by the user equipment, and controlling door locking or sunroof closing or window closing according to the second user instruction.

An embodiment of the present application further provides a vehicle body controller, the vehicle body controller including:
a signal receiving unit configured to, when receiving an unlock signal from a key, control door unlocking, or sunroof opening, or window opening according to the unlock signal, and detect whether a door is opened within first preset time;
a first control unit configured to, when the door is not opened within the first preset time, control door locking; and
a second control unit configured to, when the door is opened within the first preset time, detect a key position; if the key is not detected, control door locking, sunroof closing and window closing; and if the key is detected, determine whether to control door locking, sunroof closing and window closing according to the key position.

Optionally, the second control unit is specifically configured to:
when the key is in a vehicle, send first prompt information to user equipment, wherein the first prompt information is used to prompt that the key is in the vehicle and a sunroof and windows are not closed, and
after sending the first prompt information, receive a first user instruction sent by the user equipment, and control door locking or sunroof closing or window closing according to the first user instruction.

Optionally, the second control unit is specifically configured to:
if the key is outside the vehicle and within a preset distance range from the vehicle, detect whether a locking and window lifting function and a remote locking function of the vehicle are turned on;
if the locking and window lifting function and the remote locking function are not turned on at the same time, control door locking, sunroof closing and window closing; and
if the locking and window lifting function and the remote locking function are turned on at the same time, monitor the key position in real time; if the key is not within the preset distance range within second preset time, execute the remote locking function and closing the sunroof and windows; if the key is still within the preset distance range within the second preset time, stop real-time monitoring of the key position and turning off the remote locking function; after turning off the remote locking function, send second prompt information to the user equipment; receive a second user instruction sent by the user equipment according to the second prompt information, and control door locking or sunroof closing or window closing according to the second user instruction, wherein the second prompt information is used to prompt that the door, sunroof and/or windows are not closed.

An embodiment of the present application further provides a vehicle ventilation control system, the system including a door lock motor, a door, a window motor, windows, a sunroof motor, a sunroof, and the vehicle body controller as described above;
the vehicle body controller is used to control the door lock motor to drive locking or unlocking of the door, or to control the window motor to drive opening or closing of the windows, or to control the sunroof motor to drive opening or closing of the sunroof.

An embodiment of the present application further provides a computer-readable storage medium, characterized in that a computer program is stored in the computer-readable storage medium, where when the computer program is executed by a processor, the vehicle ventilation control method as described above is implemented.

The embodiments of the present application have at least the following beneficial effects:

The embodiments of the present application are applied to a vehicle end. When the vehicle end receives an unlock signal from a vehicle key, door unlocking, or sunroof opening or window opening are controlled according to the unlock signal (different unlock signals correspond to different control functions). At the same time, timing is started to detect whether any door of the vehicle is opened within first preset time. If all doors of the vehicle are not opened within the first preset time, door locking and sunroof and window closing are controlled. If at least one door is opened within the first preset time, the key position is detected. If the key is not detected, it means that a user is not around the vehicle and it may be a misoperation. In this case, door locking, sunroof closing and window closing are controlled. If the key is detected, it is not certain whether it is a misoperation. In this case, it is further determined whether to control door locking, sunroof closing and window closing according to the key position. The embodiments of the present application can normally use a key-long-press ventilation function. When the user long-presses a key unlock button, the doors are unlocked and the sunroof or windows are opened according to a preset strategy. At the same time, the user's intention to open the sunroof or windows is judged according to the key position, and whether to control door locking, sunroof closing and window closing is determined according to the judgment result. Therefore, the embodiments of the present application can not only achieve the key-long-press ventilation function, but can also avoid a risk of accidentally triggering the key-long-press ventilation function.

Other features and advantages of the embodiments of the present application will be described in the following description.

### BRIEF DESCRIPTION OF THE DRAWINGS

In order to more clearly illustrate the technical solutions in the embodiments or prior art of the present application, the following will briefly introduce the accompanying drawings that need to be used in the description of the embodiments or prior art, and it is obvious that the accompanying drawings in the following description are only some of the embodiments of the present application, and that for the person of ordinary skill in the art, other accompanying drawings can be obtained according to these drawings, without creative labor.
Fig. 1 is a flow chart of a vehicle ventilation control method in an embodiment of the present application.
Fig. 2 is a schematic diagram of a vehicle body controller in an embodiment of the present application.
Fig. 3 is a schematic diagram of a vehicle ventilation control system in an embodiment of the present application.

### DETAILED DESCRIPTION

Various exemplary embodiments, features, and aspects of the present application will be described in detail below with reference to the accompanying drawings. In addition, in order to better illustrate the present application, numerous specific details are given in the following specific embodiments. It will be appreciated by those skilled in the art that the present application may be practiced without certain of the specific details. In some instances, means well known to those skilled in the art are not described in detail in order to highlight the main purpose of the present application.

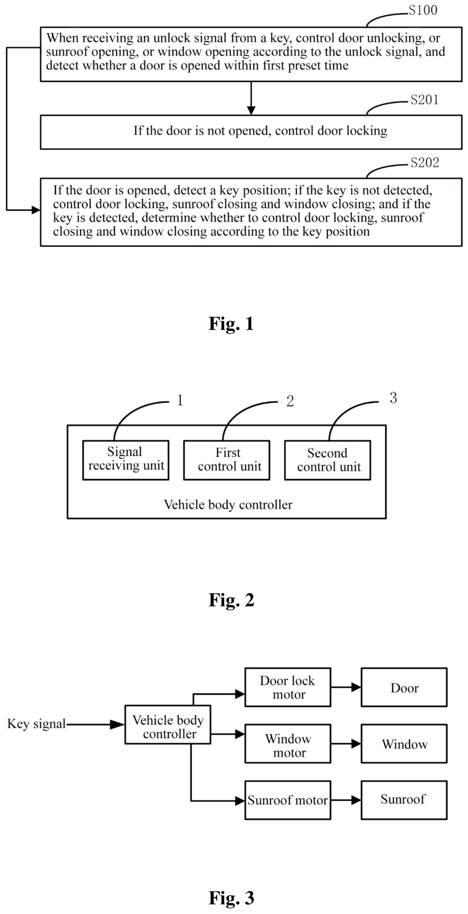

An embodiment of the present application provides a vehicle ventilation control method. The method of this embodiment is applied to a vehicle end. Referring to Fig. 1, the method of this embodiment includes the following steps:

Step S100: when receiving an unlock signal from a key, controlling door unlocking, or sunroof opening, or window opening according to the unlock signal, and detecting whether a door is opened within first preset time.

Specifically, when the vehicle end receives the unlock signal from the vehicle key, door unlocking, or sunroof opening or window opening are controlled according to the unlock signal. Different unlock signals correspond to different control functions (key-long-press ventilation function). At the same time, timing is started to detect whether any door of the vehicle is opened within the first preset time.

In order to better improve user experience, the first preset time in the method of this embodiment may be set to 20 to 40 seconds, such as 25 seconds, 30 seconds, 35 seconds, etc.;

In an example, the key-long-press ventilation function may be defined as follows (1) to (4):
(1) In case of key-short-press of the unlock button, the door will be unlocked immediately;
(2) In case of key-long-press of the unlock button for more than 2 seconds, the windows will start to automatically descend. If long pressing of the key unlock button is kept, the windows will continue to descend to the lowest position. If the key unlock button is released during the process, the windows will stop descending immediately.
(3) In case of key-long-press of the unlock button for more than 3 seconds, the sunroof will start to open automatically. If long pressing of the key unlock button is kept, the sunroof will continue to open to the maximum. If the key unlock button is released during the process, the sunroof will stop opening immediately.
(4) If long pressing of the key unlock button is kept, the whole vehicle will unlock the door at first, the windows will descend after 2 seconds, and the sunroof will open after 3 seconds.

Step S201: if the door is not opened, controlling door locking;
Specifically, when receiving the unlock signal from the user, the door is unlocked. If all the doors are not opened within the first preset time, it means that the user has no intention to open the door. Therefore, when the timing reaches the first preset time, the door is controlled to be locked.

Step S203: if the door is opened, detecting a key position; if the key is not detected, controlling door locking, sunroof closing and window closing; and if the key is detected, determining whether to control door locking, sunroof closing and window closing according to the key position.

Specifically, if at least one door is opened within the first preset time, the key position is further detected; if no legal key is detected, it means the user is not around the vehicle and it may be a misoperation, then door locking, sunroof closing and window closing are controlled; if a legal key is detected, it is not certain whether it is a misoperation, and whether to control door locking, sunroof closing and window closing is determined according to the key position.

Based on the above description, it can be seen that the method of this embodiment can normally use the key-long-press ventilation function. When the user long-presses the key unlock button, the doors are unlocked and the sunroof or windows are opened according to a preset strategy. At the same time, the user's intention to open the sunroof or windows is judged according to the key position, and whether to control door locking, sunroof closing and window closing is determined according to the judgment result. Therefore, the method of this embodiment can not only achieve the key-long-press ventilation function, but can also avoid a risk of accidentally triggering the key-long-press ventilation function.

In this embodiment, optionally, in step S203, the controlling vehicle sunroof or window opening or closing according to the key position includes:
if the key is in a vehicle, sending first prompt information to user equipment, wherein the first prompt information is used to prompt that the key is in the vehicle and a sunroof and windows are not closed.

Specifically, the user equipment is, for example, a mobile smart terminal such as a user mobile phone. Of course, since the key is in the vehicle, the user may also be in the vehicle, so the user can also be reminded that the sunroof and windows are not closed through equipment in the vehicle, such as a vehicle system, voice player, etc. Based on the method of this embodiment, after receiving the first prompt information, the user equipment displays, vibrates and/or gives a voice prompt, and the user receives the prompt and knows that the sunroof and windows of the vehicle are not closed.

In this embodiment, optionally, in step S203, the determining whether to control door locking, sunroof closing and window closing according to the key position includes:
after sending the first prompt information, receiving a first user instruction sent by the user equipment, and controlling door locking or sunroof closing or window closing according to the first user instruction.

Specifically, the user is prompted to know that the sunroof and windows of the vehicle are not closed. Therefore, if the user does not want to unlock the door, or open the sunroof or windows at this time, the user can send the first user instruction to the vehicle end through the user equipment to control the locking of the door, or close the sunroof or windows. The first user instruction includes one or more control instructions for controlling door locking, sunroof closing and window closing.

In this embodiment, optionally, in step S203, the determining whether to control door locking, sunroof closing and window closing according to the key position includes Step 1, Step 2, and Step 3:
Step 1: if the key is outside the vehicle and within a preset distance range from the vehicle, detecting whether a locking and window lifting function and a remote locking function of the vehicle are turned on.
   Specifically, the locking and window lifting function is a conventional vehicle function, which means that when the whole vehicle is locked, the sunroof and windows of the vehicle are automatically controlled to be locked; the remote locking function is also a conventional vehicle function, which refers to automatically controlling the door locking when the vehicle key is away from the vehicle;
Step 2: if the locking and window lifting function and the remote locking function are not turned on at the same time, controlling door locking, sunroof closing and window closing.
   Specifically, if any one of the two functions is not turned on and the key is outside the vehicle, it means that the user has not entered the vehicle and needs to control the door locking, sunroof closing and window closing.
Step 3: if the locking and window lifting function and the remote locking function are turned on at the same time, monitoring the key position in real time; if the key is not within the preset distance range within second preset time, executing the remote locking function and closing the sunroof and windows; and if the key is still within the preset distance range within the second preset time, stopping real-time monitoring of the key position and turning off the remote locking function.

Specifically, if both functions are turned on, the door, sunroof and windows will not be controlled temporarily, and the movement trajectory of the legal key will be monitored in real time. If the key moves out of the preset distance range and meets the remote locking function, the remote locking function and the locking and window lifting function will be executed (executing the remote locking function will trigger the locking and window lifting function), that is, the door will be locked, and the sunroof and windows will be closed; if the key is still within the preset distance range after the second preset time, it means that the user stays outside the vehicle for a long time, for example, to move things. Therefore, the remote locking function is turned off to improve the user experience and avoid the need for the user to repeatedly unlock the vehicle.

In order to better improve the user experience, the second preset time in the method of this embodiment may be set to 5 to 15 minutes, for example, 5 minutes, 10 minutes, 15 minutes, etc.

In this embodiment, optionally, in step S203, the determining whether to control door locking, sunroof closing and window closing according to the key position further includes:
after turning off the remote locking function, sending second prompt information to the user equipment, wherein the second prompt information is used to prompt that the door, sunroof and/or windows are not closed.

Specifically, the user equipment is, for example, a mobile smart terminal such as a user mobile phone. Based on the method of this embodiment, the user equipment displays, vibrates and/or gives a voice prompt after receiving the second prompt information. The user receives the prompt and knows that the sunroof and windows of the vehicle are not closed.

In this embodiment, optionally, in step S203, the determining whether to control door locking, sunroof closing and window closing according to the key position further includes:
after sending the second prompt information, receiving a second user instruction sent by the user equipment, and controlling door locking or sunroof closing or window closing according to the second user instruction.

Specifically, the user is prompted to know that the sunroof and windows of the vehicle are not closed. Therefore, if the user does not want to unlock the door, or open the sunroof or windows at this time, the user can send the second user instruction to the vehicle end through his user equipment to control the door locking, or close the sunroof or windows. The second user instruction includes one or more control instructions for controlling door locking, sunroof closing, and window closing.

Corresponding to the vehicle ventilation control method described in the above embodiment, another embodiment of the present application provides a vehicle body controller, which can be used to implement the vehicle ventilation control method described in the above embodiment. Referring to Fig. 2, the vehicle body controller includes:
a signal receiving unit 1 configured to, when receiving an unlock signal from a key, control door unlocking, or sunroof opening, or window opening according to the unlock signal, and detect whether a door is opened within first preset time;
a first control unit 2 configured to, when the door is not opened within the first preset time, control door locking; and
a second control unit 3 configured to, when the door is opened within the first preset time, detect a key position; if the key is not detected, control door locking, sunroof closing and window closing; and if the key is detected, determine whether to control door locking, sunroof closing and window closing according to the key position.

In this embodiment, optionally, the second control unit 3 is specifically used for when the key is in a vehicle, sending first prompt information to user equipment, wherein the first prompt information is used to prompt that the key is in the vehicle and a sunroof and windows are not closed.

In this embodiment, optionally, the second control unit 3 is further configured to after sending the first prompt information, receive a first user instruction sent by the user equipment, and control door locking or sunroof closing or window closing according to the first user instruction.

In this embodiment, optionally, the second control unit 3 is specifically configured to:
if the key is outside the vehicle and within a preset distance range from the vehicle, detect whether a locking and window lifting function and a remote locking function of the vehicle are turned on;
if the locking and window lifting function and the remote locking function are not turned on at the same time, control door locking, sunroof closing and window closing; and
if the locking and window lifting function and the remote locking function are turned on at the same time, monitor the key position in real time; if the key is not within the preset distance range within second preset time, execute the remote locking function and closing the sunroof and windows; if the key is still within the preset distance range within the second preset time, stop real-time monitoring of the key position and turning off the remote locking function.

In this embodiment, optionally, the second control unit 3 is specifically further configured to, after turning off the remote locking function, send second prompt information to the user equipment, where the second prompt information is used to prompt that the door, sunroof and/or windows are not closed.

In this embodiment, optionally, the second control unit 3 is specifically further configured to after sending the second prompt information, receive a second user instruction sent by the user equipment, and control door locking or sunroof closing or window closing according to the second user instruction.

The vehicle body controller of the above-described embodiment is merely schematic, where the units described as separate components may or may not be physically separated, and the components displayed as units may or may not be physical units, that is, they may be located in one place or distributed to multiple network units. Some or all of the modules may be selected according to actual needs to achieve the purpose of the vehicle body controller solution of the embodiment.

It should be noted that the vehicle body controller of the above embodiment corresponds to the method of the above embodiment. Therefore, the undescribed part of the vehicle body controller of the above embodiment can be obtained by referring to the content of the method of the above embodiment, that is, the specific steps recorded in the method of the above embodiment can be understood as the functions that can be achieved by the vehicle body controller of the above embodiment, which will not be repeated here.

Furthermore, if the vehicle body controller of the above-mentioned embodiment is implemented in the form of a software functional unit and sold or used as an independent product, it can be stored in a computer-readable storage medium. For example, the computer-readable storage medium is a memory, the vehicle body controller includes a memory and a processor, the memory stores a computer program, and when the processor executes the computer program, the vehicle body controller implements the vehicle ventilation control method described in the above embodiment, and the signal receiving unit, the first control unit and the second control unit are stored in the memory in the form of a computer program module.

Referring to Fig. 3 , another embodiment of the present application further provides a vehicle ventilation control system, the system including a door lock motor, a door, a window motor, windows, a sunroof motor, a sunroof, and the vehicle body controller as described in the above embodiment;
the vehicle body controller is used to control the door lock motor to drive locking or unlocking of the door, or to control the window motor to drive opening or closing of the windows, or to control the sunroof motor to drive opening or closing of the sunroof.

Another embodiment of the present application further provides a computer-readable storage medium, characterized in that a computer program is stored in the computer-readable storage medium, where when the computer program is executed by a processor, the vehicle ventilation control method as described in the above embodiment is implemented.

Specifically, the computer-readable storage medium may include: any entity or recording medium that can carry the computer program instructions, USB flash drive, mobile hard disk, magnetic disk, optical disk, computer memory, read-only memory (ROM), random access memory (RAM), electric carrier signal, telecommunication signal and software distribution medium, etc.

Various embodiments of the present application have been described above. The above description is exemplary, not exhaustive, and is not limited to the disclosed embodiments. Many modifications and variations will be apparent to those of ordinary skill in the art without departing from the scope and gist of the described embodiments. The terms used in this document are selected to best explain the principles of the embodiments, practical applications or technical improvements in the marketplace, or to enable other ordinary technicians in this technical field to understand the embodiments disclosed herein.

## Claims

1. A vehicle ventilation control method, **characterized by** comprising:
when receiving an unlock signal from a key, controlling door unlocking, or sunroof opening, or window opening according to the unlock signal, and detecting whether a door is opened within first preset time;
if the door is not opened, controlling door locking; and
if the door is opened, detecting a key position; if the key is not detected, controlling door locking, sunroof closing and window closing; and if the key is detected, determining whether to control door locking, sunroof closing and window closing according to the key position.

2. The vehicle ventilation control method according to claim 1, wherein the controlling vehicle sunroof or window opening or closing according to the key position comprises:
if the key is in a vehicle, sending first prompt information to user equipment, wherein the first prompt information is used to prompt that the key is in the vehicle and a sunroof and windows are not closed.

3. The vehicle ventilation control method according to claim 2, wherein the determining whether to control door locking, sunroof closing and window closing according to the key position comprises:
after sending the first prompt information, receiving a first user instruction sent by the user equipment, and controlling door locking or sunroof closing or window closing according to the first user instruction.

4. The vehicle ventilation control method according to claim 1, wherein the determining whether to control door locking, sunroof closing and window closing according to the key position comprises:
if the key is outside the vehicle and within a preset distance range from the vehicle, detecting whether a locking and window lifting function and a remote locking function of the vehicle are turned on;
if the locking and window lifting function and the remote locking function are not turned on at the same time, controlling door locking, sunroof closing and window closing; and
if the locking and window lifting function and the remote locking function are turned on at the same time, monitoring the key position in real time; if the key is not within the preset distance range within second preset time, executing the remote locking function and closing the sunroof and windows; and if the key is still within the preset distance range within the second preset time, stopping real-time monitoring of the key position and turning off the remote locking function.

5. The vehicle ventilation control method according to claim 4, wherein the determining whether to control door locking, sunroof closing and window closing according to the key position further comprises:
after turning off the remote locking function, sending second prompt information to the user equipment, wherein the second prompt information is used to prompt that the door, sunroof and/or windows are not closed.

6. The vehicle ventilation control method according to claim 5, wherein the determining whether to control door locking, sunroof closing and window closing according to the key position further comprises:
after sending the second prompt information, receiving a second user instruction sent by the user equipment, and controlling door locking or sunroof closing or window closing according to the second user instruction.

7. A vehicle body controller, **characterized by** comprising:
a signal receiving unit configured to, when receiving an unlock signal from a key, control door unlocking, or sunroof opening, or window opening according to the unlock signal, and detect whether a door is opened within first preset time;
a first control unit configured to, when the door is not opened within the first preset time, controlling door locking; and
a second control unit configured to, when the door is opened within the first preset time, detect a key position; if the key is not detected, control door locking, sunroof closing and window closing; and if the key is detected, determine whether to control door locking, sunroof closing and window closing according to the key position.

8. The vehicle body controller according to claim 7, wherein the second control unit is specifically configured to:
when the key is in a vehicle, send first prompt information to user equipment, wherein the first prompt information is used to prompt that the key is in the vehicle and a sunroof and windows are not closed; and
after sending the first prompt information, receive a first user instruction sent by the user equipment, and control door locking or sunroof closing or window closing according to the first user instruction.

9. The vehicle body controller according to claim 7, wherein the second control unit is specifically configured to:
if the key is outside the vehicle and within a preset distance range from the vehicle, detect whether a locking and window lifting function and a remote locking function of the vehicle are turned on;
if the locking and window lifting function and the remote locking function are not turned on at the same time, control door locking, sunroof closing and window closing; and
if the locking and window lifting function and the remote locking function are turned on at the same time, monitor the key position in real time; if the key is not within the preset distance range within second preset time, execute the remote locking function and closing the sunroof and windows; if the key is still within the preset distance range within the second preset time, stop real-time monitoring of the key position and turning off the remote locking function; after turning off the remote locking function, send second prompt information to the user equipment; receive a second user instruction sent by the user equipment according to the second prompt information, and control door locking or sunroof closing or window closing according to the second user instruction, wherein the second prompt information is used to prompt that the door, sunroof and/or windows are not closed.

10. A vehicle ventilation control system, **characterized by** comprising a door lock motor, a door, a window motor, windows, a sunroof motor, a sunroof, and the vehicle body controller according to any one of claims 7 to 9;
wherein the vehicle body controller is used to control the door lock motor to drive locking or unlocking of the door, or to control the window motor to drive opening or closing of the windows, or to control the sunroof motor to drive opening or closing of the sunroof.

11. A computer-readable storage medium, **characterized in that** a computer program stored in the computer-readable storage medium, wherein when the computer program is executed by a processor, the vehicle ventilation control method according to any one of claims 1 to 6 is implemented.
